# EUROPÄISCHE PATENTSCHRIFT

(11) **EP 2 122 025 B1**
(45) Veröffentlichungstag und Bekanntmachung des Hinweises auf die Patenterteilung: **24.11.2010**
(21) Anmeldenummer: 08709006.4
(22) Anmeldetag: 14.02.2008
(51) Int. Cl.: D02J 13/00, F16C 39/06, H05B 6/14

(54) **GALETTE**
GALETTE
GALETTE

(30) Priorität: 16.02.2007 DE 102007007710
(43) Veröffentlichungstag der Anmeldung: 25.11.2009
(73) Patentinhaber: Oerlikon Textile GmbH & Co. KG, 42897 Remscheid (DE)
(72) Erfinder: PEDAK, Ulf, 24793 Brammer (DE)
(74) Vertreter: Kahlhöfer, Hermann
(86) Internationale Anmeldenummer: PCT/EP2008/051816
(87) Internationale Veröffentlichungsnummer: WO 2008/098996

(56) Entgegenhaltungen:
- EP-A- 0 454 618
- EP-A- 1 475 340
- WO-A-02/095104
- DE-A1- 19 733 239
- DE-A1- 19 902 315

## Beschreibung

Die Erfindung betrifft eine Galette gemäß dem Oberbegriff des Anspruchs 1.

Antreibbare und induktiv beheizbare Galetten sind beispielsweise aus der Patentschrift EP 0 511 549 B1 bekannt. Sie werden in Fäden verarbeitenden Anlagen eingesetzt, um Fäden zu führen und zu fördern. Hierzu weist die Galette einen antreibbaren drehbaren Mantel auf, über den der Faden in einer halben Umschlingung oder aber, in Verbindung mit einer zweiten Galette oder Überlaufrolle, in mehreren Umschlingungen geführt wird. Aufgrund der Eytelweinschen Beziehung ist es so möglich, auf den Faden Kräfte zu übertragen. Hierzu wird die Galette mittels eines Elektromotors angetrieben.

Um dem Faden bestimmte physikalische Eigenschaften zu vermitteln, ist der Galettenmantel zudem induktiv beheizbar. Hierfür sind innerhalb des Galettenmantels Induktionsspulen vorgesehen, die ein hochfrequentes elektromagnetisches Wechselfeld erzeugen. Dieses induziert in dem Galettenmantel Wirbelströme, die den Galettenmantel beheizen.

Nachteilig bei angetriebenen Galetten ist das hohe Bauvolumen, das sich durch den auf der Rückseite der Galette angeflanschten Elektromotor ergibt. Es sind zwar aus dem Stand der Technik Lösungen bekannt, bei denen der Motor innerhalb des Galettenmantels vorgesehen ist.

So wird in der Patentanmeldung EP 1 475 340 A1 vorschlagen, eine gattungsgemäße, jedoch unbeheizte Walze als Außenläufermotor auszuführen, bei der innen ein fest stehender Stator vorgesehen ist, während der Mantel der Walze als Rotor ausgeführt ist.

Die Integration eines aus Stator und Rotor bestehenden Motors in eine beheizte Galette wird in der Patentanmeldung DE 199 02 315 A1 gezeigt. Durch den zusätzlichen innerhalb des Galettenmantels zu integrierenden Rotor und Stator verlängert sich jedoch die Baulänge der Galette über den Fadenführungsbereich hinaus, wodurch sich ebenfalls ein hohes Bauvolumen ergibt. Zwar steht hier die gesamte Länge der Galette für den Fadenlauf zur Verfügung, es kann jedoch nur ein Teil der Mantellänge der Galette beheizt werden.

Eine radiale Anordnung von Motor und Heizer innerhalb des Galettenmantels wird in der Patentanmeldung JP 10-210710 A gezeigt. Dazu ist auf einer feststehenden Achse ein Stator vorgesehen, der einen auf dieser Achse gelagerten rohrförmigen Rotor antreibt. Außerhalb des Rotors ist ein Halter für die Heizspulen angeordnet. Wiederum außerhalb dieses Halters ist der Galettenmantel angeordnet, der stirnseitig mit dem Rotor verbunden ist. Auch wenn diese Anordnung zu einer kurzen Baulänge führt, so wird sie mit einem großen Galettendurchmesser erkauft. Es werden jedoch in Fäden verarbeitenden Anlagen zum Teil eine größere Anzahl von Galetten verwendet, so dass ein größerer Galettendurchmesser zwangsläufig zu einem höheren Bauvolumen der Anlage führt.

Es ist daher Aufgabe der Erfindung, eine elektromotorisch betriebene und beheizte Galette in kurzer und zugleich schlanker Bauweise bereitzustellen.

Diese Aufgabe wird erfindungsgemäß durch das Merkmal des Anspruch 1 gelöst. Dabei wird die geforderte kurze Bauweise dadurch erreicht, dass der Bereich, über den sich die Heizung in der Galette axial erstreckt und die somit für die Beheizung der Fäden zur Verfügung steht, mit dem Bereich, über den sich der Rotor und der Stator des Motors erstreckten, zumindest teilweise überdeckt und zugleich Heizung und Stator auf einem gemeinsamen Halter angeordnet sind. Es hatte sich gezeigt, dass für die gleichmäßige Beheizung des Galettenmantels nicht zwingend eine gleichmäßige Belegung des Heizbereiches mit Induktionsspulen erforderlich ist. So ist es bekannt, dass in den Randzonen des Heizbereiches eine höhere Heizleistung erforderlich ist, um die Wärmeverluste in den Randzonen auszugleichen. Somit kann zwischen den Randzonen eine Belegung der Induktionsspulen mit weniger Windungen erfolgen, so dass hier Platz für den Stator vorhanden ist. Daher sieht eine Weiterbildung der Erfindung vor, dass der Motorbereich innerhalb des Heizbereiches liegt.

Es ist zwar aus der Patentanmeldung EP 1 231 308 A1 bekannt, innerhalb des Galettenmantels einer gattungsgemäßen Galette radial und axial abwechselnd Spulen für ein Magnetlager und Induktionsspulen für die Heizung vorzusehen. Hierdurch wird aber die Lösung der Aufgabe nicht nahe gelegt, da die Anordnung der in der EP 1 231 308 A1 gezeigten Spulen prinzipiell nicht geeignet ist, um einen Galettenmantel elektromotorisch anzutreiben.

In einer Variante der Erfindung sind eine oder mehrere Statorspulen zusammen mit mehreren Heizspulen axial innerhalb des Motor- und Heizbereiches angeordnet. Diese axiale Anordnung ermöglicht es, beispielsweise für die besonders intensiv zu beheizenden Randbereiche eigene Heizspulen vorzusehen. Der Platz zwischen diesen Heizspulen kann dann für eine Statorspule oder für mehrere Statorspulen, zwischen denen jeweils eine weitere Heizspule vorgesehen ist, genutzt werden.

In einer anderen Variante sind die Spulen radial angeordnet. So ist in dieser Variante die Lösung eingeschlossen, das auf dem gemeinsamen Halter zunächst beispielsweise die Heizspulen angeordnet sind, während die Statorspulen auf dem gemeinsamen Halter außerhalb der Heizspulen angeordnet sind. Die umgekehrte Anordnung ist ebenfalls möglich.

In einer weiteren Variante sind die Stator- und Heizspulen auf dem Umfang tangential verteilt angeordnet. Üblicherweise werden Statorspulen bei einer dreiphasigen Stromversorgung so angeordnet, dass sich auf dem Umfang verteilt 3 oder 6 Spulen ergeben, wobei die Spulenachsen radial ausgerichtet sind. Hierdurch ergibt sich, dass die Windungen der Statorspulen überwiegend axial verlaufen. Daher bietet es sich für die Erfindung besonders an, die Windungen der Heizspulen in den Lücken zwischen den Statorwindungen unterzubringen. Dabei kann die Heizwindung sich sowohl über die gesamte Länge der Statorwindungen erstrecken als sich auch in mehrere Zonen unterteilen.

Die beschriebenen Varianten können auch miteinander kombiniert sein. So ist es beispielsweise sinnvoll, axial zwischen zwei Heizspulen im Randbereich einen Bereich mit tangential oder radial angeordneten Heiz- und Statorwindungen vorzusehen.

In einer Erweiterung der Erfindung sind die Windungen der Statorspule und die Windungen zumindest einer der Heizspulen zu einer gemeinsamen Spule gewickelt. Dies kann beispielsweise dadurch erfolgen, dass die in Drähte der Heizspule und die Drähte der Statorspule in abwechselnden Lagen auf einen gemeinsamen Kern gewickelt werden.

In einer besonders bevorzugten Erweiterung der Erfindung werden für die Funktion der Statorspule und die Funktion der Heizspule zumindest teilweise dieselben Windungen verwendet. Hierzu wird die Spule von zwei Wechselstromquellen gespeist, wobei die erste Wechselstromquelle ein Drehfeld mit der Drehfrequenz des Galettenmantels erzeugt und die zweite Wechselstromquelle das Feld für die induktive Beheizung des Galettenmantels.

Eine besonders wirtschaftlich herzustellende Ausführungsform der erfindungsgemäßen Galette sieht eine oder mehrere Spulen mit tangential umlaufenden Windungen vor. Diese Windungen sind auf Ferritkernen aufgebracht, die zum Galettenmantel hin gerichtet mehrere auf dem Umfang verteilte Pole aufweist.

Mit diesen Polen korrespondieren Permanentmagnete, die auf dem Galettenmantel aufgebracht sind. Somit bewirkt eine Bestromung der Spule einen magnetischen

Fluss durch die Pole der Ferritkerne, wobei jeweils eine Reihe der Pole die gleiche Polarität und die zweite Reihe die entgegengesetzte Polarität aufweist. Je nachdem, ob die Polarität der Permanentmagneten gleich oder entgegengesetzt ist, wird eine anziehende oder abstoßende elektromagnetische Kraft zur Drehung des Galettenmantels bewirkt.

Ein erfindungsgemäßes Verfahren zum Betreiben einer Galette zum Führen und Fördern von Fäden mit einen drehbar gelagerten und mit Heizspulen induktiv beheizbaren Galettenmantel sieht vor, dass zumindest ein Teil der Heizspulen zusätzlich mit einem Wechselstrom gespeist werden, der ein Drehfeld erzeugt und so eine Drehung des Galettenmantels bewirkt. Dies kann gleichzeitig erfolgen, indem dem hochfrequenten Wechselstrom zum Heizen ein Wechselstrom niedrigerer Frequenz aufmoduliert wird. Dabei findet keine oder kaum eine gegenseitige Beeinträchtigung statt, da sich die Frequenzen mindestens um den Faktor 10 bis 20 unterscheiden.

Alternativ erfolgt die Bestromung abwechselnd mit der Heizfrequenz und mit der Frequenz zum Drehen des Galettenmantels.

Stehen mehrere Heizspulen in Form von axialen Heizzonen zur Verfügung, erfolgt die abwechselnde Bestromung bevorzugt in der Form, dass möglichst immer, zumindest aber die überwiegende Zeit an zumindest einer der Spulen die Frequenz zum Drehen des Galettenmantels anliegt, damit ein gleichmäßiges Drehmoment anliegt.

Ein Ausführungsbeispiel wird im Folgenden unter Hinweis auf die beigefügten Zeichnungen näher beschrieben.

Es stellen dar:
- Fig. 1: eine Variante der erfindungsgemäßen Galette mit axial unterteilten Heiz- und Statorspulen.
- Fig. 2: eine weitere Variante der erfindungsgemäßen Galette, wobei die Sta- torspule und die Heizspule zu einer gemeinsamen Spule mit radial ange- ordneten Spulenwicklungen gewickelt sind.
- Fig. 3: eine Variante der erfindungsgemäßen Galette mit axial unterteilten Heiz- und Statorspulen, um wobei eine der Heizspulen und die Statorspule ge- meinsame Spulenwindungen verwenden.
- Fig. 4: eine Variante der erfindungsgemäßen Galette mit mehreren axial unterteil- ten Spulen, die zugleich Heiz- und Statorspule darstellen.

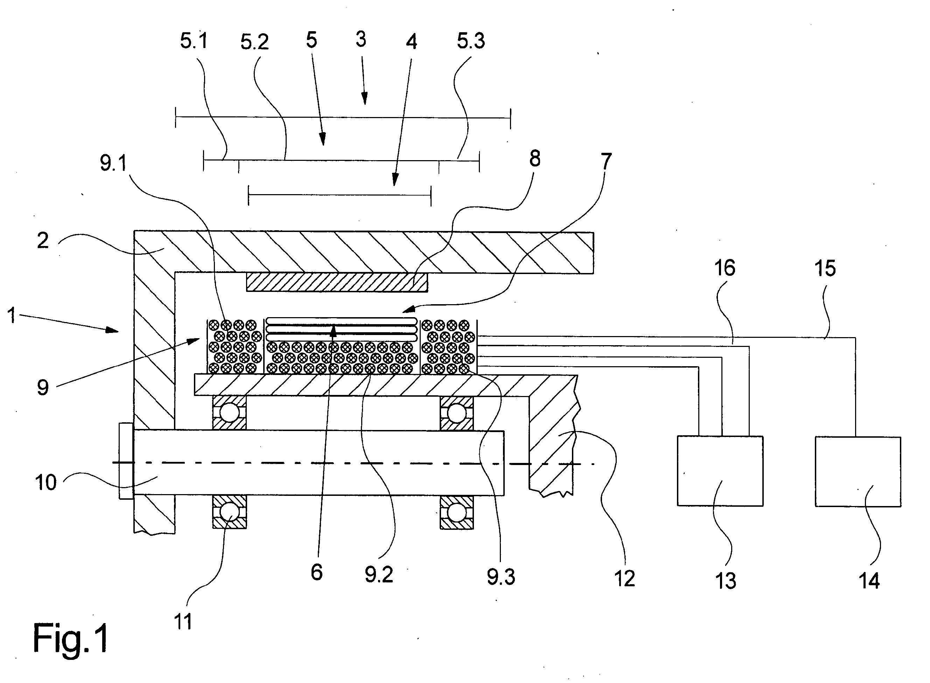

In Figur 1 ist eine Galette 1 im Schnitt dargestellt. Die Galette 1 besteht im Wesentlichen aus dem beheizbaren Galettenmantel 2, der mit der in der Lagerung 11 drehbar gelagerten Welle 10 verbunden ist. Auf dem äußeren Umfang des Galettenmantels 2 können in einer halben Umschlingung, oder in Verbindung mit einer zweiten Galette oder Überlaufrolle in mehreren Umschlingungen, Fäden innerhalb eines Führungsbereiches 3 geführt werden. Einerseits kann auf Grund der Reibung eine Zugkraft auf die Fäden ausgeübt werden, andererseits wird durch den Kontakt mit dem Galettenmantel die Wärme des Galettenmantels auf die Fäden übertragen.

Die Fäden können innerhalb eines sich axial ausstreckenden Führungsbereiches 3 geführt werden. Die Beheizung des Galettenmantels erfolgt innerhalb eines sich axial ausstreckenden Heizbereiches 5. Es ist offensichtlich, dass der tatsächlich nutzbare Führungsbereich sich auf den Heizbereich 5 beschränkt.

Der Halter 12, in dem die Lagerung 11 fixiert ist, trägt zugleich die Heizspulen 9 und den Stator 6. Die Heizspulen 9 werden von der Heizspulenspeisung 13 über die Zuleitungen 16 jeweils mit einem hochfrequenten Wechselstrom gespeist. Dadurch werden in dem elektrisch leitfähigen Galettenmantel Wirbelströme induziert, die den Galettenmantel beheizen. Der Stator 6 wird von der Statorspeisung 14 über die Statorspulenzuleitung 15 mit einem in der Regel mehrphasigen Wechselstrom gespeist. Wie bei dem Stator eines Wechselstrommotors üblich, sind die Statorspulen 7 des Stators 6 so gewickelt, dass sie mehrere gleichmäßig auf dem Umfang verteilte Spulen ergeben, deren Achsen radial angeordnet sind. Zumeist werden drei oder sechs Spulen vorgesehen, die von einem dreiphasigen Wechselstrom gespeist werden. Dadurch ergibt sich ein Drehfeld mit, abhängig von der Anzahl der Spulen, der ganzen oder der halben Frequenz des Wechselstroms. Die Figur 1 zeigt die parallel zur Drehachse des Galettenmantels angeordneten Windungen der Spule. Der Stator 6. korrespondiert mit einem innerhalb des Galettenmantels angeordneten Rotor 8, der wie allgemein bei Elektromotoren üblich aufgebaut ist. Dabei kann der Rotor 8 entweder aus Permanentmagneten oder aus kurzgeschlossen Spulen aufgebaut sein. Die Lage des Stators 6 und des Rotors 8 definieren den sich axial erstreckenden Motorbereich 4.

Die Heizspulen 9 setzen sich aus drei Spulen 9.1 bis 9.3 zusammen. Die Randabschnitte 5.1 und 5.3 des Heizbereiches 5 werden von den Spulen 9.1 und 9.3 induktiv beheizt. Auf Grund der Ableitung der Wärme ist hier eine höhere Heizleistung erforderlich als in dem mittleren Abschnitt 5.2 des Heizbereiches. Daher ist es ausreichend, dass die Heizspulen 9.2 weniger dicht gewickelt sind als es in den Randabschnitten der Fall ist. Somit ergibt sich hier ein zusätzlicher Platz für die Statorspulen 7, die hier radial außerhalb der Heizspule 9. 2 gewickelt sind.

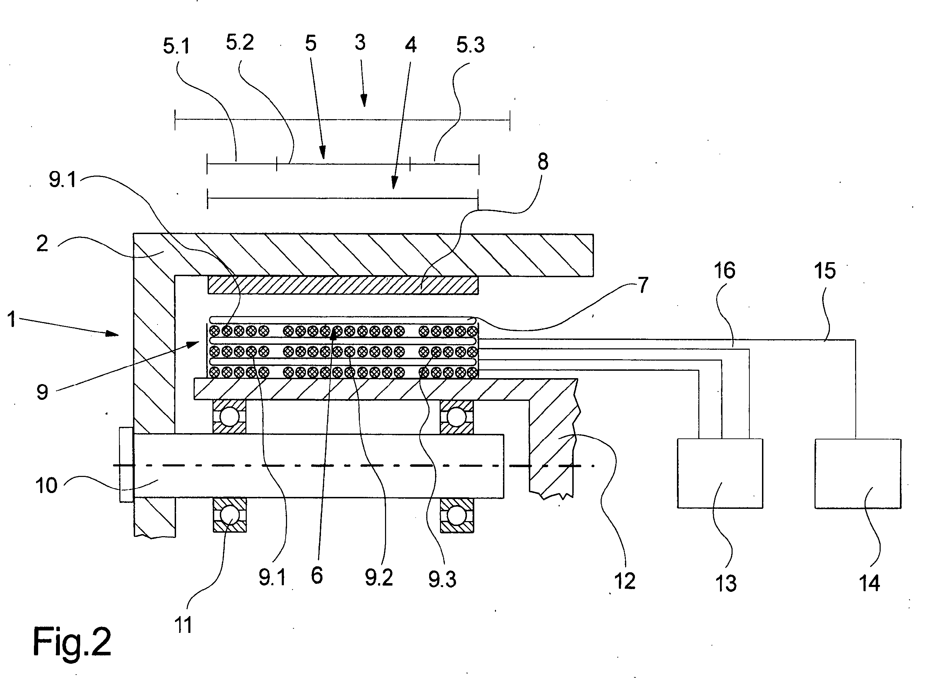

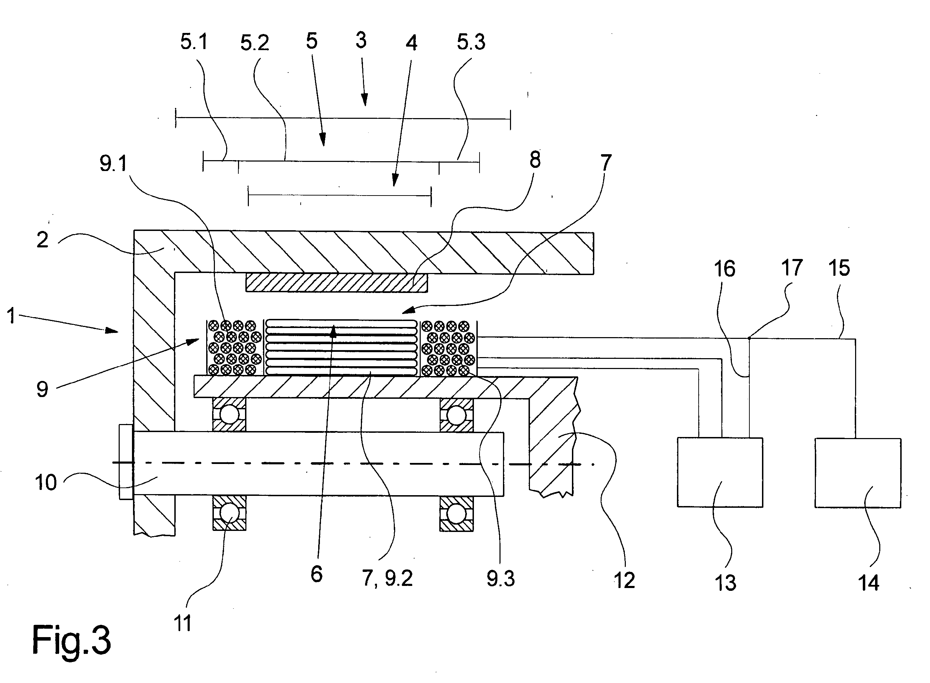

In den Figuren 2 und 3 werden jeweils alternative Ausführungsformen der Heizspulen 9 und Statorspulen 7 dargestellt.

In Figur 2 erstrecken sich abweichend von der Darstellung in Figur 1 die Statorspulen 7 des Stators 6 über den gesamten Heizbereich 5. In diesen Beispielen sind jeweils abwechselnd eine Lage der Wicklung der Heizspule 9.1 bis 9.3 und eine Lage der Abwicklung der Statorspulen 7 übereinander gewickelt.

In Figur 3 wird die mittlere Heizspule 9.2 und die Statorspulen 7 durch gemeinsame Windungen gebildet. Dazu wird die Statorspulenzuleitung 15 und die Heizspulenzuleitung 16 durch eine Zusammenführung 17 zusammengeführt. Dadurch erzeugt die Spule 9.2 beziehungsweise 7 sowohl ein Drehfeld als auch ein höherer - höherfrequentes Induktionsfeld.

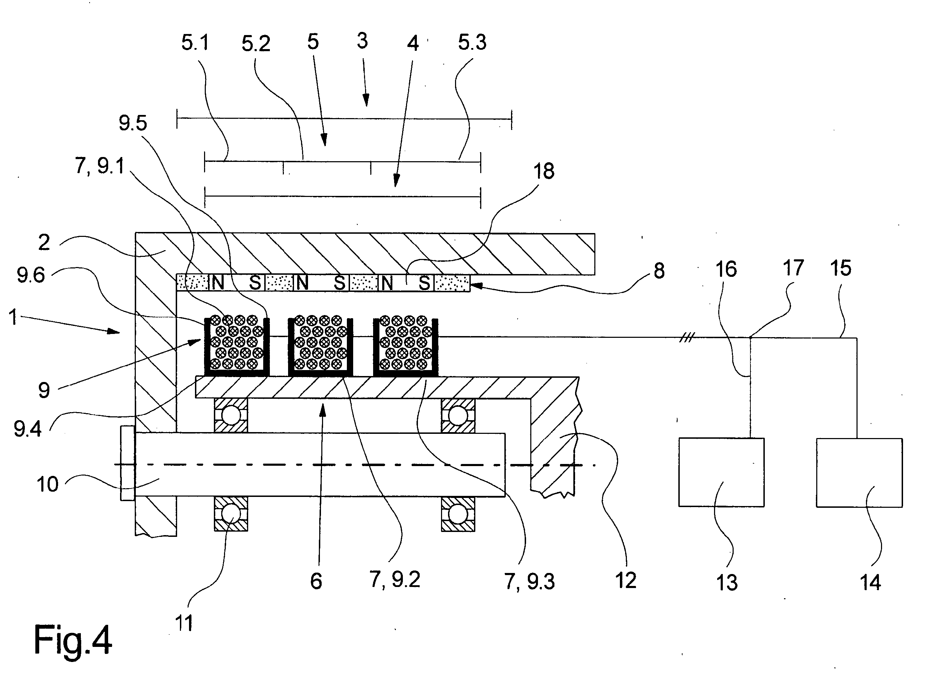

Figur 4 zeigt eine Anordnung von drei Spulen 9.1 bis 9.3, die sowohl mit der Heizspulenspeisung 13 als auch mit der Statorspulenspeisung 14 verbunden sind, wobei sich jede der Spulen 9.1 bis 9.3 unabhängig speisen lässt. Die Spulen 9.1 bis 9.3 sind in Umfangsrichtung gewickelt. Sie sind um U-förmige Ferritkerne 9.4 gewickelt, die die zum Galettenmantel 2 gerichteten Joche 9.5 und 9.6 bilden. Die Joche sind am Außenumfang segmentiert, so dass jedes Joch auf dem Umfang eine Vielzahl von Polen aufweist. Dies erfolgt dadurch, dass die Ferritkerne 9.4 aus mehreren diskreten auf dem Umfang verteilten U-förmigen Ferritkernen gebildet werden. Es ist auch möglich, einen Ring oder mehrere Ringteile vorzusehen, die auf dem Umfang in einzelne Segmente genutet sind.

Jedem Pol der Joche 9.5, 9.6 ist auf der Seite des Galettenmantels ein Permanentmagnet 18 zugeordnet, dessen Nord-Süd-Polung hier in axialer Richtung angeordnet ist, wobei die Pole des Permanetmagneten 18 den Jochen 9.5 und 9.6 gegenübersteht. Andere Anordnungen der Permanentmagnete mit derselben Wirkung sind möglich. Wird nun die Spule 9.1 mit einem Strom gespeist, so bildet sich ein Magnetfeld um die Wicklungen, wobei sich beispielsweise an Joch 9.6 ein Südpol und an Joch 9.5 ein Nordpol ausbildet, so dass der dargestellt Permanentmagnet angezogen wird, was den Galettenmantel dreht, bis sich die Pole des Joches und der Permanentmagnet gegenüberstehen, daraufhin wird der Strom umgepolt, so dass die die Pole anstoßen und der Galettenmantel weitergedreht wird.

Durch Verdrehen der Polausrichtung benachbarter Spulen um beispielsweise einen halben tangentialen Polabstand lassen sich Totpunkte bei der Drehung vermeiden, was insbesondere beim Anlauf hilft. Diese Anordnungen sind aus dem Bereich der Elektromotoren bekannt.

Es ist möglich, die Spulen 9.1 bis 9.3 gleichzeitig mit einer Frequenz zum Heizen und einer Frequenz zum Antreiben des Galettenmantels zu speisen.

Alternativ kann beispielsweise immer eine oder mehrere der Spulen mit der Frequenz zum Antreiben des Galettenmantels gespeist werden, währen die anderen Spulen zum Heizen verwendet werden. In wiederkehrenden Zeitabschnitten werden die Rollen der Spulen vertauscht. Ebenfalls sind intelligente Betriebsarten möglich. Beispielsweise ist es sinnvoll, beim Beschleunigen oder Verzögern des Galettenmantels sämtliche Spulen ausschließlich mit der Frequenz zum Antreiben des Galettenmantels zu betreiben. Sowohl die thermische Trägheit als auch die Massenträgheit helfen hier, die unterschiedlichsten Betriebsarten und -folgen zu verwenden.

### Bezugszeichenliste

- 1: Galette
- 2: Galettenmantel
- 3: Führungsbereich
- 4: Motorbereich
- 5: Heizbereich
- 5.1 - 5.3: Abschnitt des Heizbereiches
- 6: Stator
- 7: Statorspulen
- 8: Rotor
- 9: Heizspulen
- 9.1 - 9.3: Heizspule
- 9.4: Ferritkern
- 9.5,9.6: Joch
- 10: Welle
- 11: Lager
- 12: Halter
- 13: Heizspulenspeisung
- 14: Statorspeisung
- 15: Statorspulenzuleitung
- 16: Heizspulenzuleitung
- 17: Zusammenführung
- 18: Permanentmagnet

## Patentansprüche

1. Galette (1) zum Führen und Fördern von Fäden,
wobei die Galette (1) einen drehbar gelagerten Galettenmantel (2) aufweist, über dessen Oberfläche die Fäden innerhalb eines sich axial erstreckenden Führungsbereiches (3) geführt werden,
wobei der Galettenmantel (2) mittels eines sich axial über einen Motorbereich (4) erstreckenden aus Statorspulen (7) aufgebauten Stators (6) und eines mit dem Galettenmantel (2) verbundenen mit dem Stator (6) zusammenwirkenden Rotors (8) elektromotorisch antreibbar ist, und wobei der Galettenmantel (2) mittels sich axial über einen Heizbereich (5) erstreckender Heizspulen (9) induktiv beheizbar ist, wobei sich Statorspulen (7) und Heizspulen (9) innerhalb des Galettenmantels (2) auf einem gemeinsamen Halter (12) befinden, **dadurch gekennzeichnet, dass**
sich der Motorbereich (4) und der Heizbereich (5) zumindest teilweise überdecken.

2. Galette nach Anspruch 1,
**dadurch gekennzeichnet, dass**
der Motorbereich (4) innerhalb des Heizbereiches (5) liegt.

3. Galette nach Anspruch 1 oder 2,
**dadurch gekennzeichnet, dass**
eine oder mehrere Statorspulen (7) und mehrere Heizspulen (9) axial innerhalb des Motor- (4) und Heizbereiches (5) angeordnet sind.

4. Galette nach einem der vorhergehenden Ansprüche,
**dadurch gekennzeichnet, dass**
eine oder mehrere Statorspulen (7) und eine oder mehrere Heizspulen (9) radial innerhalb des Motor- (4) und Heizbereiches (5) angeordnet sind.

5. Galette nach einem der vorhergehenden Ansprüche,
**dadurch gekennzeichnet, dass**
eine oder mehrere Statorspulen (7) und eine oder mehrere Heizspulen (9) tangential auf dem Umfang verteilt innerhalb des Motor- (4) und Heizbereiches (5) angeordnet sind.

6. Galette nach einem der vorhergehenden Ansprüche,
**dadurch gekennzeichnet, dass**
die Windungen der Statorspulen (7) und der Heizspulen (9) zumindest teilweise zu einer gemeinsamen Spule gewickelt sind.

7. Galette nach einem der vorhergehenden Ansprüche,
**dadurch gekennzeichnet, dass**
für die Funktion der Statorspulen (7) und der Heizspulen (9) zumindest teilweise dieselben Windungen verwendet werden.

8. Galette nach Anspruch 7,
**dadurch gekennzeichnet, dass**
die Galette eine oder mehrere tangential gewickelte gemeinsame Heiz- und Statorspulen (9.1-9.3) aufweist,
dass jede Spule auf Ferritkerne (9.4) gewickelt ist, die am dem Galettenmantel (2) zugeordneten Außenumfang auf dem Umfang verteilte Pole aufweisen,
und dass auf dem Galettenmantel eine Reihe von Permanentmagneten (18) angeordnet ist, deren Pole jeweils mit den von den Ferritkernen (9.4) gebildeten Polen zusammenwirken.

9. Verfahren zum Betreiben einer Galette (1) zum Führen und Fördern von Fäden,
wobei die Galette (1) einen drehbar gelagerten Galettenmantel (2) aufweist, über dessen Oberfläche die Fäden innerhalb eines sich axial erstreckenden Führungsbereiches (3) geführt werden,
wobei der Galettenmantel (2) mittels sich axial über einen Heizbereich (5) erstreckender Spulen induktiv beheizbar ist,
wobei die Spulen mit einem Wechselstrom gespeist werden, der eine induktive Beheizung des Galettenmantels (2) bewirkt,
**dadurch gekennzeichnet, dass**
zumindest ein Teil der Heizspulen (9) zusätzlich mit einem Wechselstrom gespeist werden, der ein Drehfeld erzeugt und so eine Drehung des Galettenmantels (2) bewirkt.

10. Verfahren nach Anspruch 9,
**dadurch gekennzeichnet, dass**
die Speisung der Heizspulen (9) mit Wechselstrom zur Drehfelderzeugung und die Speisung mit Wechselstrom zum Heizen des Galettenmantels in kurzer zeitlicher Folge alternierend erfolgt.

11. Verfahren nach Anspruch 10,
**dadurch gekennzeichnet, dass**
die Galette axial in mehrere Zonen unterteilt ist und dass jede dieser Zonen mit einer Heizspule (9) versehen ist, und dass die alternierende Speisung der einzelnen Zonen so abgestimmt ist, dass immer oder zumindest überwiegend mindestens eine der Heizspulen (9) mit Wechselstrom zur Erzeugung des Drehfeldes gespeist wird.

## Claims

1. Godet (1) for guiding and conveying threads,
the godet (1) having a rotatably mounted godet casing (2) over the surface of which the threads are guided within an axially extending guide region (3),
the godet casing (2) being electromotively driveable by means of a stator (6) constructed from stator coils (7) and extending axially through a motor region (4) and of a rotor (8) connected to the godet casing (2) and cooperating with the stator (6),
and the godet casing (2) being inductively heatable by means of heating coils (9) extending axially through a heating region (5),
the stator coils (7) and heating coils (9) being located on a common support (12) within the godet casing (2),
**characterized in that**
the motor region (4) and the heating region (5) at least partially overlap.

2. Godet according to Claim 1,
**characterized in that**
the motor region (4) lies within the heating region (5).

3. Godet according to Claim 1 or 2,
**characterized in that**
one or more stator coils (7) and a plurality of heating coils (9) are arranged axially within the motor region (4) and heating region (5).

4. Godet according to one of the preceding claims,
**characterized in that**
one or more stator coils (7) and one or more heating coils (9) are arranged radially within the motor region (4) and heating region (5).

5. Godet according to one of the preceding claims,
**characterized in that**
one or more stator coils (7) and one or more heating coils (9) are arranged within the motor region (4) and heating region (5) in a manner distributed tangentially around the periphery.

6. Godet according to one of the preceding claims,
**characterized in that**
at least some of the turns of the stator coils (7) and of the heating coils (9) are wound to form a common coil.

7. Godet according to one of the preceding claims,
**characterized in that**
at least some of the same turns are used for the function of the stator coils (7) and of the heating coils (9).

8. Godet according to Claim 7,
**characterized in that**
the godet has one or more tangentially wound common heating and stator coils (9.1-9.3),
**in that** each coil is wound on ferrite cores (9.4) which have poles distributed around the periphery on the outer periphery assigned to the godet casing (2),
and **in that** arranged on the godet casing is a series of permanent magnets (18), the poles of which in each case cooperate with the poles formed by the ferrite cores (9.4).

9. Method of operating a godet (1) for guiding and conveying threads, the godet (1) having a rotatably mounted godet casing (2) over the surface of which the threads are guided within an axially extending guide region (3),
the godet casing (2) being inductively heatable by means of coils extending axially through a heating region (5),
the coils being supplied with an alternating current which brings about inductive heating of the godet casing (2),
**characterized in that**
at least some of the heating coils (9) are additionally supplied with an alternating current which generates a rotating field and thus causes the godet casing (2) to rotate.

10. Method according to Claim 9,
**characterized in that**
the supply of the heating coils (9) with alternating current to generate a rotating field and the supply with alternating current to heat the godet casing take place in a manner alternating at short time intervals.

11. Method according to Claim 10,
**characterized in that** the godet is subdivided axially into a plurality of zones and **in that** each of these zones is provided with a heating coil (9), and **in that** the alternating supply of the individual zones is adjusted such that one of the heating coils (9) is always, or at least predominantly, supplied with alternating current to generate the rotating field.

## Revendications

1. Galette (1), destinée à guider et à transporter des fils, la galette (1) ayant une enveloppe de galette (2) supportée de façon rotative, sur la surface de laquelle les fils sont guidés à l'intérieur d'une région de guidage (3) s'étendant axialement, l'enveloppe de galette (2) étant entraînable de façon électromotrice au moyen d'un stator (6) qui s'étend axialement sur une région du moteur (4) et qui est constitué de bobines de stator (7) et au moyen d'un rotor (8) connecté à l'enveloppe de galette (2) et coopérant avec le stator (6) et l'enveloppe de galette (2) pouvant être chauffée de manière inductive au moyen de bobines de chauffage (9) s'étendant axialement sur une région de chauffage (5), les bobines de stator (7) et les bobines de chauffage (9) se trouvant sur une retenue commune (12) à l'intérieur de l'enveloppe de galette (2), **caractérisée en ce que** la région du moteur (4) et la région de chauffage (5) se recouvrent au moins partiellement.

2. Galette selon la revendication 1, **caractérisée en ce que** la région du moteur (4) se trouve à l'intérieur de la région de chauffage (5).

3. Galette selon la revendication 1 ou 2, **caractérisée en ce qu'**une bobine de stator ou une pluralité de bobines de stator (7) et une pluralité de bobines de chauffage (9) sont agencées axialement à l'intérieur de la région du moteur (4) et de la région de chauffage (5).

4. Galette selon l'une des revendications précédentes, **caractérisée en ce qu'**une bobine de stator (7) ou une pluralité de bobines de stator (7) et une bobine de chauffage ou une pluralité de bobines de chauffage (9) sont agencées radialement à l'intérieur de la région du moteur (4) et de la région de chauffage (5).

5. Galette selon l'une des revendications précédentes, **caractérisée en ce qu'**une bobine de stator (7) ou une pluralité de bobines de stator (7) et une bobine de chauffage (9) ou une pluralité de bobines de chauffage (9) sont réparties de façon tangentielle sur la circonférence tout en étant agencées à l'intérieur de la région du moteur (4) et de la région de chauffage (5).

6. Galette selon l'une des revendications précédentes, **caractérisée en ce que** les spires des bobines de stator (7) et celles des bobines de chauffage (9) sont enroulées au moins partiellement en une bobine commune.

7. Galette selon l'une des revendications précédentes, **caractérisée en ce que** pour la fonction des bobines de stator (7) et des bobines de chauffage (9) les mêmes spires sont utilisées au moins partiellement.

8. Galette selon la revendication 7, **caractérisée en ce que** la galette a une bobine de stator ou une pluralité de bobines de chauffage et de stator (9.1-9.3) communes enroulées de manière tangentielle, **en ce que** chaque bobine est enroulée sur des cores de ferrite (9.4) qui sur la circonférence extérieure associée à l'enveloppe de galette (2) ont des pôles répartis sur la circonférence, et **en ce qu'**une série d'aimants permanents (18) est agencée sur l'enveloppe de galette dont les pôles coopèrent respectivement avec les pôles formés par les cores de ferrite (9.4).

9. Procédé d'exploitation d'une galette (1) pour guider et pour transporter des fils, la galette (1) ayant une enveloppe de galette (2) supportée de façon rotative, sur la surface de laquelle les fils sont guidés à l'intérieur d'une région de guidage (3) s'étendant axialement, l'enveloppe de galette (2) pouvant être chauffée de façon inductive au moyen de bobines s'étendant axialement sur une région de chauffage (5), les bobines étant alimentées par un courant alternatif, qui produit un chauffage inductif de l'enveloppe de galette (2), **caractérisé en ce qu'**au moins une partie des bobines de chauffage (9) sont alimentées en outre par un courant alternatif qui génère un champ magnétique rotatif et qui provoque ainsi une rotation de l'enveloppe de galette (2).

10. Procédé selon la revendication 9, **caractérisé en ce que** l'alimentation des bobines de chauffage (9) en courant alternatif pour générer des champs magnétiques rotatifs et l'alimentation en courant alternatif pour chauffer l'enveloppe de galette est effectuée très vite en alternance

11. Procédé selon la revendication 10, **caractérisé en ce qu'**axialement la galette est divisée en une pluralité de zones et **en ce que** chacune de ces zones est pourvue d'une bobine de chauffage (9) et **en ce que** l'alimentation alternante des zones individuelles s'accorde de manière telle qu'une des bobines de chauffage (9) est toujours ou au moins -la plupart du temps - alimentée par le courant alternatif pour générer le champ magnétique rotatif.
